# EUROPEAN PATENT APPLICATION

(11) **EP 1 079 623 A1**
(43) Date of publication of application: **28.02.2001**
(21) Application number: 00907933.6
(22) Date of filing: 08.03.2000
(51) Int. Cl.: H04N 5/76, H04N 5/44, H04N 7/08

(54) **RECEIVING DEVICE AND METHOD**

(30) Priority: 08.03.1999 JP 5988199
(71) Applicant: Sony Corporation, Tokyo 141-0001 (JP); Information Broadcasting Laboratories, Inc., Taito-ku, Tokyo 111-0035 (JP)
(72) Inventor: TAKABAYASHI, Kazuhiko, Sony Corporation, Tokyo 141-0001 (JP); HARAOKA, Kazuo, Sony Corporation, Tokyo 141-0001 (JP); KIMURA, Takeshi, Inform. Broadcasting Lab. Inc., Tokyo 111-00 35 (JP); YAMAGISHI, Yasuaki, Sony Corporation, Tokyo 141-0001 (JP); GONNO, Yoshihisa, Sony Corporation, Tokyo 141-0001 (JP); NISHIO, Fumihiko, Sony Corporation, Tokyo 141-0001 (JP)
(74) Representative: Pratt, Richard Wilson
(86) International application number: JP0001385
(87) International publication number: WO0054500

(57) **Abstract**

Contents is segmented on a unit basis of a meaningful structure, meta-information regarding segment data is added to each segment data, and the contents is distributed. The meta-information is attribute information of the segment data and constructed by positioning and time-dependent arrangement of the segment data in the contents structure, a unique ID, and the like. In a receiving apparatus, the segment data and the corresponding meta-information are stored in association with each other. The segment data of the same ID is not stored on the basis of the meta-information. The reproduction can be controlled every segment data. When reproducing in parallel with the reception of the contents, the repetitive reproduction or the pause of the reproduction of the desired segment data of the user can be performed. After the distribution of the contents, the order of the stored segment data can be changed and the segment data is reproduced in accordance with the desire of the user.

## Description

### Technical Field

The invention relates to receiving apparatus and method in which digital contents which has been segmented and transmitted on a unit basis of a meaningful structure and meta-information associated for it are received and the received digital contents can be scheduled and reproduced on the basis of the meta-information and the setting by the user.

### Background Art

Hitherto, a recording and a reproduction of contents broadcasted by a television broadcasting, a radio broadcasting, or the like have been performed by various methods. For example, in the television broadcasting, a video recording apparatus is connected to a television receiver and the recording and reproduction of a broadcasted program or the like are performed. Similarly, in the radio broadcasting, a radio receiver and a sound recording apparatus are connected and the recording and reproduction of a broadcasted program or the like are performed. In case of monitoring the broadcasting, the user selects a target to be monitored on a program unit basis and monitors it simultaneously with the reception, or after the program is recorded by the foregoing video recording apparatus or sound recording apparatus, the user reproduces and monitors the recorded contents.

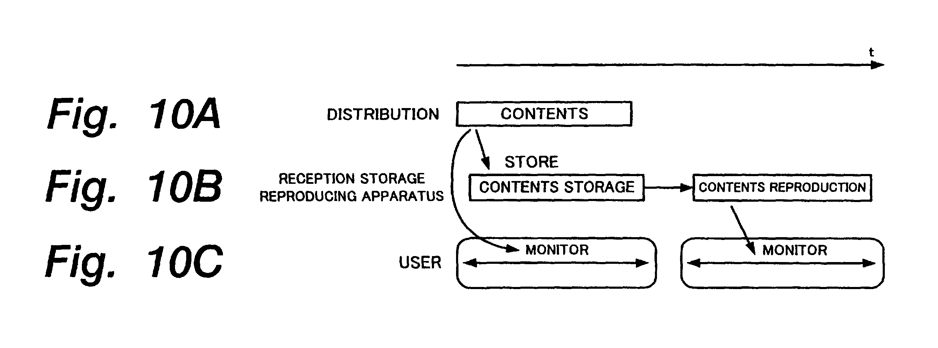

Hitherto, with respect to the monitoring of the broadcasting, a degree of freedom of the user is extremely low. Fig. 10 schematically shows such a monitoring of the broadcasting according to the prior art. Fig. 10A shows contents which is distributed by the broadcasting. In this case, the contents denotes a program which is broadcasted and distributed. In case of monitoring the broadcasted contents simultaneously with the reception, there is a problem such that the user merely can monitor continuous data which is distributed by the broadcasting as a time-sequence as it is at the time when it is transmitted as shown in Fig. 10C.

In the case where the broadcasted contents is recorded once by the video recording apparatus and, thereafter, reproduced, the video recording by the video recording apparatus is performed simultaneously with the reception of the contents as shown in Fig. 10B. After completion of the distribution of the whole contents, the recorded contents is reproduced and the reproduced contents is monitored by the user (Fig. 10C).

In this case, the user can time-sequentially operate the recorded contents by performing a fast-forward reproduction or rewinding reproduction at the time of reproduction. However, since the recording and a management of the recorded contents are usually performed on a unit basis of a relatively large unit such as a program unit, there is a problem such that the degree of freedom regarding the monitoring of the contents by the user is low.

### Disclosure of Invention

It is, therefore, art object of the invention to provide digital contents receiving apparatus and method for enabling the user to time-sequentially operate contents which has been broadcasted and distributed as continuous data.

To solve the above problem, according to the invention, there is provided a receiving apparatus to which segment data obtained by segmenting contents into meaningful segments and meta-information including a unique ID every segment data are distributed and which receive the distributed segment data and meta-information, comprising: receiving means for receiving the segment data; storing means for storing the segment data received by the receiving means as segments as they are and storing the meta-information of the segment data received together with the segment data in association with the received segment data; and reproduction control means for controlling and reproducing the received segment data and/or the segment data stored in the storing means every segment data in accordance with a setting.

According to the invention, there is provided a receiving method whereby segment data obtained by segmenting contents into meaningful segments and meta-information including a unique ID every segment data are distributed and the distributed segment data and meta-information are received, comprising: a receiving step of receiving the segment data; a storing step of storing the segment data received in the receiving step as segments as they are and storing the meta-information of the segment data received together with the segment data in association with the received segment data; and a reproduction control step of controlling and reproducing the received segment data and/or the segment data stored in the storing step every segment data in accordance with a setting.

As mentioned above, according to the invention, the segment data obtained by segmenting the contents into the meaningful segments and the meta-information including the unique ID every segment data are received, the received segment data is stored as segments as they are into the storing means. The meta-information corresponding to the segment data is stored in the storing means in association with the segment data. The stored segment data is controlled and reproduced every segment data in accordance with the setting. Therefore, the contents can be reproduced at a high degree of freedom.

### Brief Description of Drawings

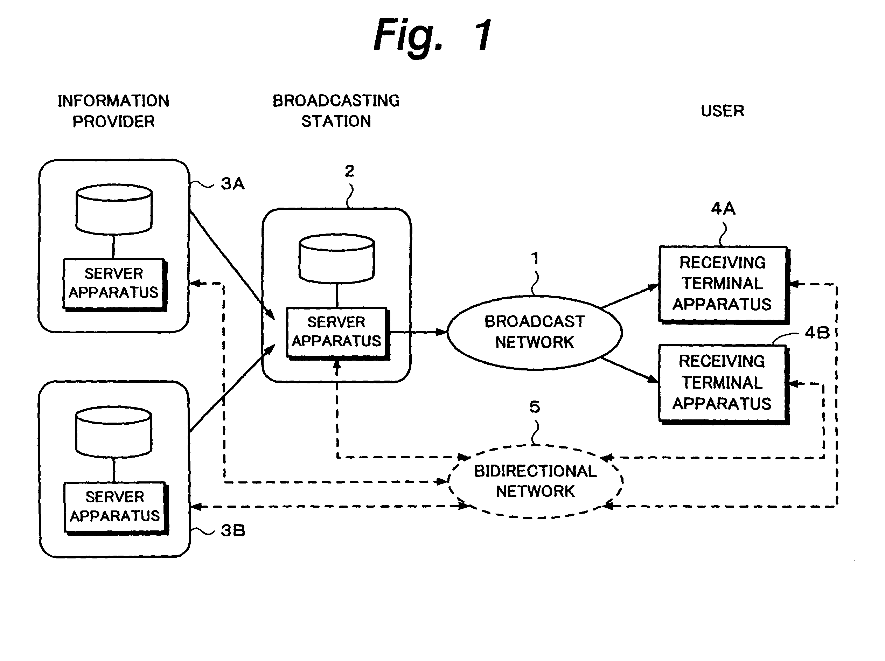

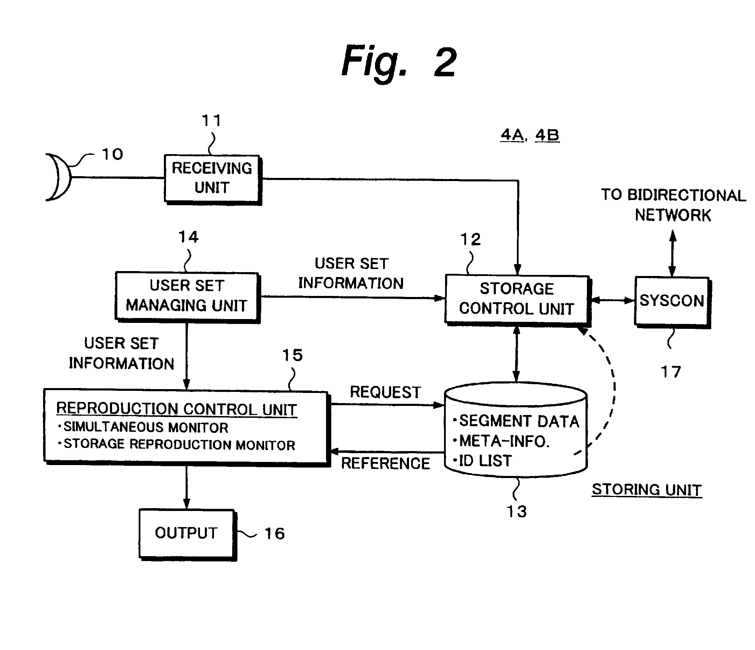

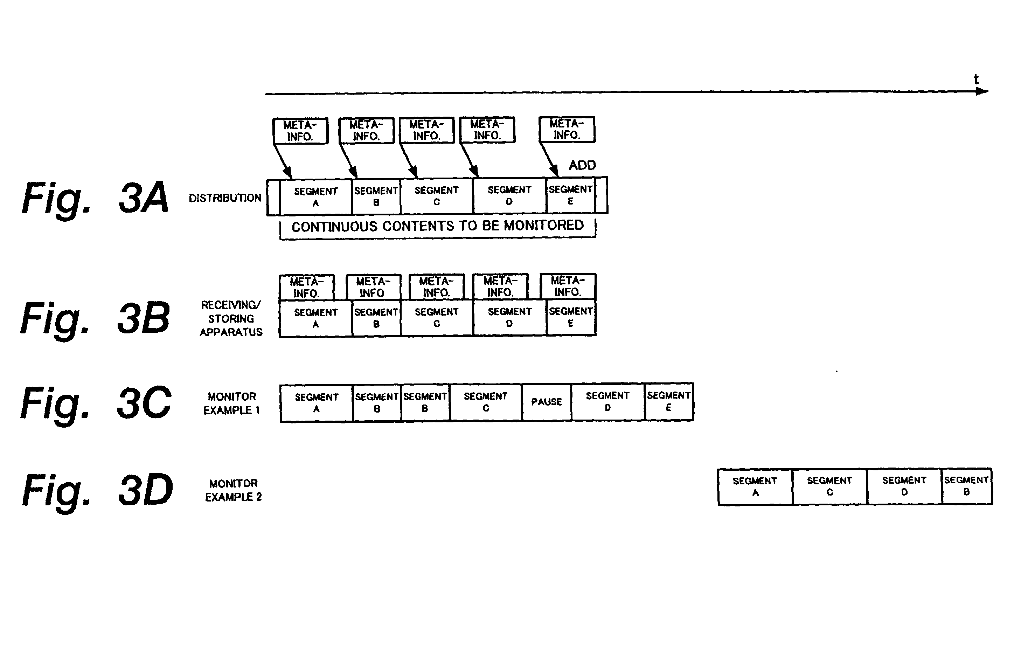

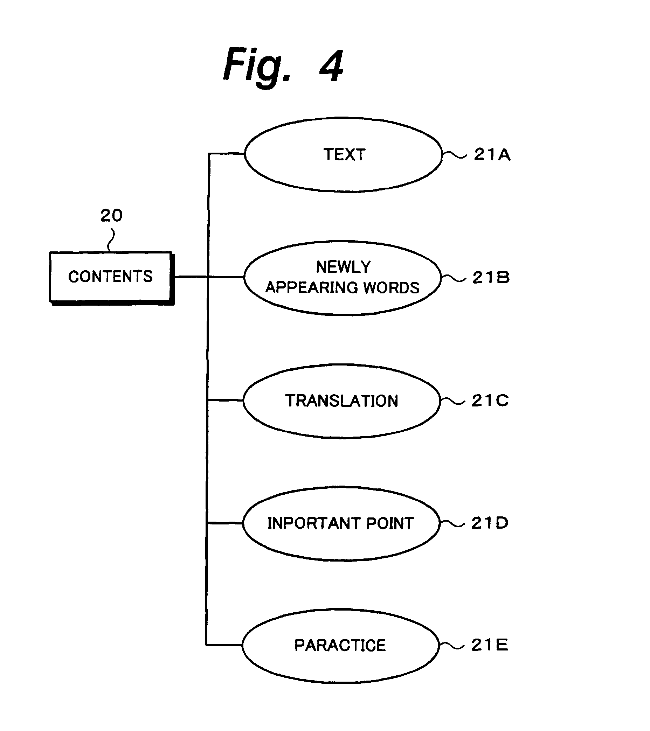

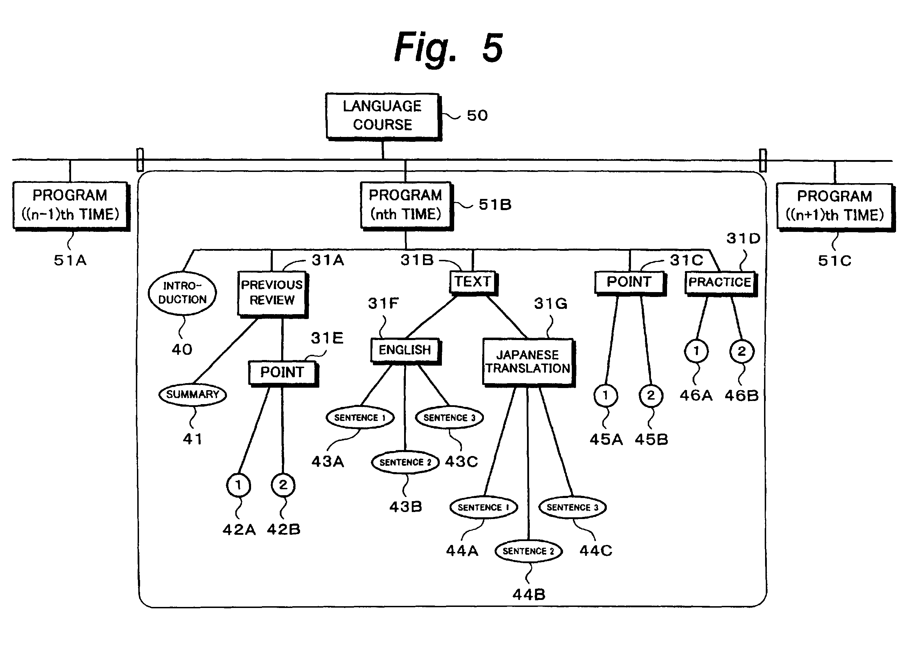

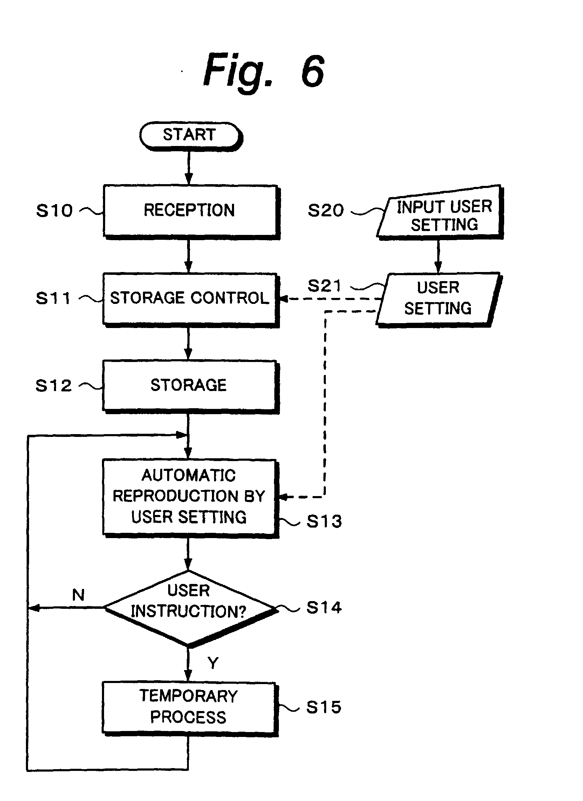

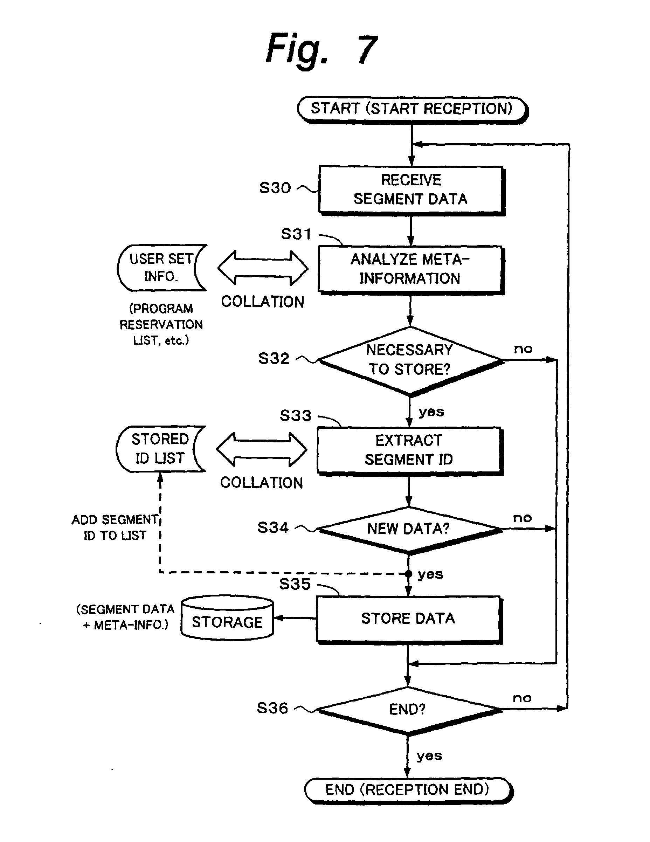

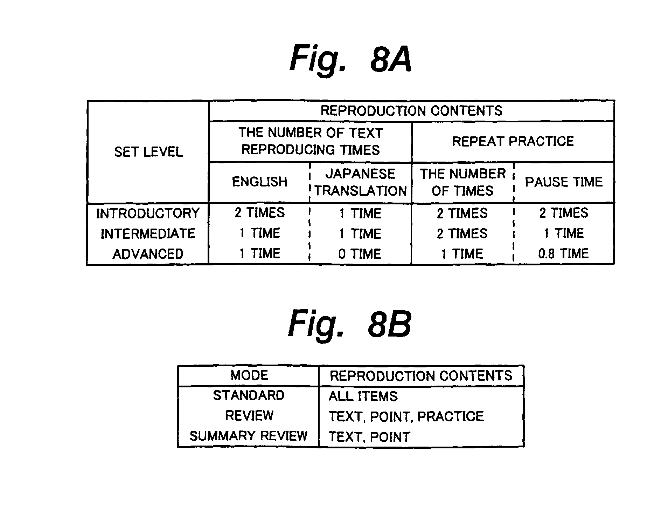

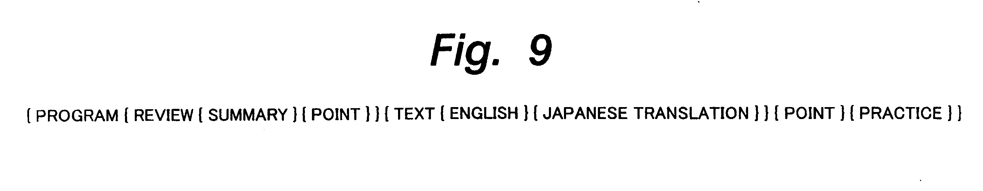

Fig. 1 is a schematic diagram showing an example of a construction of a contents distributing system which can be applied to the invention; Fig. 2 is a block diagram showing an example of a construction of a receiving terminal apparatus according to an embodiment; Fig. 3A, 3B, 3C and 3D are schematic diagrams showing an example of a reception, a storage, and a reproduction (monitoring) of contents according to the invention; Fig. 4 is a schematic diagram for explaining a segmentation of the contents; Fig. 5 is a schematic diagram for explaining the operation for segmenting the contents in a layer manner; Fig. 6 is a schematic flowchart for processes in a range from the reception to the reproduction of the distributed contents; Fig. 7 is a schematic diagram showing an example of more detailed flowchart and user setting of a storing control process; Figs. 8A, 8B and 9 are schematic diagrams showing an example of a method of expressing the layered contents; and Fig. 10A, 10B and 10C are schematic diagrams schematically showing a monitoring of a broadcasting according to the prior art.

### Best Mode for Carrying Out the Invention

An embodiment of the invention will now be described hereinbelow with reference to the drawings. Fig. 1 shows an example of a construction of a contents distributing system which can be applied to the invention. A broadcast network 1 is a network which can simultaneously distribute information to a number of users like, for example, a broadcasting. Contents is distributed from a broadcasting station 2 to the user through the broadcast network 1. More specifically, the contents stored in a server apparatus which the broadcasting station 2 has is outputted from the server apparatus and received by receiving terminal apparatuses 4A and 4B of the user through the broadcast network 1. It will be obviously understood that a further large number of users exist and the receiving terminal apparatuses of the number as many as the number of users also exist.

The contents is a general denomination of, for example, video data, audio data, text data, map data, and the like. In the example of Fig. 1, particularly, the contents is a program which is broadcasted by the broadcasting station 2 by a television broadcasting or a radio broadcasting and comprises a video image and/or audio sound. It is assumed hereinbelow that the contents which is distributed by the broadcasting station 2 is a digital television broadcasting such that audio sound, a video image, and the like are broadcasted by a digital system.

Although the details will be described hereinbelow, the contents is segmented on the basis of a meaningful structure and distributed as segment data by the broadcasting station 2. At this time, meta-information showing the meaning of the segment data is distributed in association with the segment data. The meta-information includes a unique ID showing the corresponding segment data.

The contents is not limited to the data of the digital system but a video signal and an audio signal of an analog system can be also included in the contents. A combination of those plurality of data and signals, for example, the program of the television broadcasting mentioned above, a video clip comprising music data, video data, and artist information regarding the music data, an electronic publication comprising a text, a figure, and the like formed by digital data, and the like can be also included as contents.

On the user side, the contents received by the receiving terminal apparatuses 4A and 4B are reproduced and monitored. The receiving terminal apparatuses 4A and 4B have storing means of a video image and sound and can store the received contents. The stored contents can be reproduced and monitored at different time. Upon reproduction, the receiving terminal apparatuses 4A and 4B can operate the contents on a segmentation unit basis and perform a rearrangement, an omission, a repetition, or the like of the segment data on the basis of instructions of the user.

The contents which is distributed from the broadcasting station 2 is formed by, for example, information providing sources 3A and 3B. The formed contents has previously been segmented on the basis of a meaningful structure and respectively stored in, for example, server apparatuses which the information providing sources 3A and 3B have. Information regarding the segment data obtained by segmenting the contents is held as meta-information into the server apparatuses. The contents is supplied from the information providing sources 3A and 3B to the broadcasting station 2. Naturally, a further large number of information providing sources can exist.

The broadcasting station 2, information providing sources 3A and 3B, and receiving terminal apparatuses 4A and 4B are mutually connected by a bidirectional network 5. Information can be requested from the receiving terminal apparatuses 4A and 4B to the information providing sources 3A and 3B or broadcasting station 2 through the bidirectional network 5. For example, the information providing sources 3A and 3B can provide the meta-information or contents to the receiving terminal apparatuses 4A and 4B through the bidirectional network 5. It is also possible to provide the contents from the information providing sources 3A and 3B to the broadcasting station 2 through the bidirectional network 5 and transmit them from the broadcasting station 2 to the receiving terminal apparatuses 4A and 4B.

Fig. 2 shows an example of a construction common to the receiving terminal apparatuses 4A and 4B (hereinafter, represented by the receiving terminal apparatus 4A). A channel by which the contents which the user intends to monitor is distributed is selected in a receiving unit 11 by the operation of the receiving terminal apparatus 4A of the user. The distributed contents is received by an antenna 10. The received contents is outputted from the receiving unit 11.

The contents outputted from the receiving unit 11 is supplied to a storage control unit 12. In the storage control unit 12, the segment data of the supplied contents is stored in a storing unit 13, and the meta-information associated for the segment data is extracted and stored in the storing unit 13. A unique ID of the segment data included in the meta-information corresponding to the stored segment data is allocated to an ID list.

A recording medium such as hard disk or semiconductor memory to which a random access can be performed is preferably used as a storing unit 13. A magnetic tape can be also used as a recording medium of the storing unit 13.

The segment data of the contents stored in the storing unit 13 is reproduced by the control of a reproduction control unit 15. A request for the segment data to be reproduced is issued from the reproduction control unit 15 to the storing unit 13 on the basis of user set information of a user set managing unit 14. The segment data based on the request and a reference result of the meta-information are returned to the reproduction control unit 15. On the basis of it, the reproduction control unit 15 reads out the necessary segment data from the storing unit 13, reproduces, and supplies to an output unit 16. For example, a simultaneous monitoring in which the reproduction is performed almost simultaneously with the reception by the receiving unit 11, a storage reproduction monitoring in which the segment data stored in the storing unit 13 is reproduced later and monitored, or the like is executed on the basis of the control of the reproduction control unit 15. A reproduction output is supplied to the output unit 16. For example, if it is video data, it is displayed to a display.

The storage control of the segment data to the storing unit 13 according to the storage control unit 12 and the reproduction control of the segment data stored in the storing unit 13 by the reproduction control unit 15 are set by the user set managing unit 14. The user set managing unit 14 has operators such as a switch for outputting a predetermined control signal by the operation of the user, or the like. Further, the user set managing unit 14 has memory means such as a memory or the like, and information based on the operation of the operator is stored therein. The user set information set by the user set managing unit 14 on the basis of the operation of the user is supplied to the storage control unit 12 and reproduction control unit 15.

The whole receiving terminal apparatus 4A is controlled by a syscon 17 comprising, for example, a microprocessor, a memory, or the like. The syscon 17 can communicate with the outside through the bidirectional network 5. For example, information can be requested to the broadcasting station 2 or information providing sources 3A and 3B through the bidirectional network 5. It is also possible to receive the information transmitted through the bidirectional network 5 and supply it to, for example, the storage control unit 12.

Fig. 3A, 3B, 3C and 3D show an example of the reception, storage, and reproduction (monitoring) of the contents according to the invention. In Fig. 3A, 3B, 3C and 3D, the direction from the left side to the right side is the direction of the time-sequence. Fig. 3A shows the contents which is distributed to the broadcast network 1. As mentioned above, the contents is distributed as a data train segmented to a plurality of segments having a meaning in terms of a structure. The segment data obtained by segmenting the distributed contents into the segments are now assumed to be segments A to E. The segment data A to E can be mutually discriminated by the unique ID included in the meta-information corresponding to each of them.

The corresponding meta-information is added to each of the segment data A to E. The meta-information comprises: for example, a position and time-dependent arrangement in the structure of the whole contents of the corresponding segment data; and attribute information of the segment data such as size (length) of segment data and the like. The meta-information is made to correspond to the corresponding segment data and stored in the storing unit 13 together with the segment data A to E. When the meta-information is stored in the storing unit 13, the information regarding the arrangement of the segment data A to E included in the meta-information is converted into arrangement information of the segment data A to E in the storing unit 13, for example, into address information.

Fig. 3B schematically shows a state where the contents distributed as mentioned above is received by the receiving terminal apparatus 4A and the received contents is stored in the storing unit 13. The contents is received in distributing order as shown in Fig. 3A. The meta-information is made to correspond to the corresponding segment data, respectively. The segment data A to E and the meta-information corresponding to each of the segment data A to E are stored in the storing unit 13. The storage of the segment data and the meta-information into the storing unit 13 can be set to a temporary storage.

Figs. 3C and 3D show an example of the reception in Fig. 3B and a reproducing method of the stored contents according to the embodiment. A monitor example 1 in Fig. 3C is an example in which the user operation is performed during the simultaneous monitoring. The operation is set by the operation of the user in such a manner that during the monitoring of the contents, the segment data B is repetitively monitored and, after that, the sequel of the segment data B is monitored. By the control of the reproduction control unit 15 based on the user set information according to the setting, the segment data B stored in the storing unit 13 is repetitively read out and reproduced. Subsequent to the second reproduction of the segment data B, the segment data C and subsequent data are reproduced and monitored in the same order as that upon reception.

Further, after the segment data C is monitored, a pause of the monitoring is set by the user operation. On the basis of the setting, the reproduction from the storing unit 13 is temporarily stopped. When the pause state is cancelled by the operation of the user, the reproduction is started from the segment D next to the segment data C to which the stop has been instructed.

A monitor example 2 of Fig. 3D is an example in which the reproduction of the partial segment data is omitted and the reproducing order is exchanged at the time of the storage, reproduction, and monitoring. On the basis of the meta-information of the segment data A to E stored in the storing unit 13, the necessary segment data among the segment data A to E is selected and reproduced. At the same time, the reproducing order of the segment data is exchanged on the basis of the meta-information so as to be different from that upon reproduction. Also in a manner similar to the above, on the basis of the user set information, the above process is performed by controlling the reading operation of the segment data A to E stored in the storing unit 13 by the reproduction control unit 15.

The segmentation of the contents will now be described by using Figs. 4 and 5. A program "language course" in the television broadcasting is now considered as an example of the contents. The contents can be simply structured as shown in an example in Fig. 4. In this example, the contents has a structure comprising five elements of "text", "newly appearing words", "translation", "important point", and "practice". That is, contents 20 as "language course" comprises segment data 21A, 21B, 21C, 21D, and 21E corresponding to "text", "newly appearing words", "translation", "important point", and "practice", respectively. As mentioned above, the segment data 21A to 21E can be mutually discriminated by the IDs included in each corresponding meta-information.

By using such a structure by segmenting the contents 20, the "language course" can be monitored as shown in Figs. 3C and 3D mentioned above. That is, in the example of Fig. 3C, according to the monitor example 1, the monitoring is started together with the start of the reception and "newly appearing words" are repetitively monitored twice during the monitoring. Further, the monitoring is paused for an interval between "translation" and "important point". After the restart, remaining "important point" and "practice" are monitored. In the example of Fig. 3D, the contents is stored once in the storing unit 13 and, after completion of the reception of the contents, it is monitored. The monitoring is started and the monitoring of "newly appearing words" is omitted during the monitoring. After "translation" and "important point" are monitored first, "newly appearing words" are monitored.

The invention is not limited to the example shown in Fig. 4 but it is also possible to further finely structure the segment data 21A to 21E and segment the data on the basis of them.

Fig. 5 shows an example in which the structure of Fig. 4 is further complicated and segmented. In the diagram, the direction from the left side to the right side is the direction of the time-sequence. A structure in which the contents has been layered is shown. In Fig. 5, each of elements 40, 41, 42A, 42B, 43A to 43C, 44A to 44D, 45A, 45B, 46A, and 46B (hereinafter, collectively expressed as "elements 40 to 46") shown by circles are elements of the actual contents. For example, the elements 40 to 46 denote substantial data such as audio data, text data, video data, and the like.

Tags 31A to 31I, 51A to 51C, and 50 shown by quadrangles are provided to structure the contents. For example, the elements 40 to 46 are classified and grouped by those tags. Further, a structure in which the contents has been layered by grouping the other tags is obtained.

In the example of Fig. 5, for example, the contents "language course" 50 comprises a plurality of "programs" 51A, 51B, 51C, ... in which they are the contents by themselves and which are periodically distributed. Each "program" is further layered to a plurality of stages. For example, the "program" 51B of the nth time has the element 40 and a plurality of tags 31A, 31B, 31C, and 31D as a lower structure. Each of the tags 31A, 31B, 31C, and 31D has a plurality of elements and tags as a further lower structure.

As mentioned above, by allowing the contents to have the layer structure, a data management can be easily performed on each of the side which produces the contents and the user side. When seen from the user side, a selection such that "previous review" shown by the tag 31A and "practice" shown by the tag 31D are omitted and only "text" shown by the tag 31B is monitored can be more easily made than in Fig. 4 mentioned above. Further, it is also possible to select a desired program for each of the elements 40 to 46 and monitor. On the contents producing side, for example, the data can be also easily used again for each of the elements 40 to 46.

In the example of Fig. 5, the contents is segmented, for example, on an element unit basis and can be mutually discriminated by the ID included in the meta-information corresponding to each of the elements 40 to 46. In this instance, in the case where the contents is distributed as a series, it is assumed that the ID which can be unconditionally specified in the series without limiting to the inside of the contents of one time which is continuously transmitted is allocated to the segment data. For instance, in case of the contents "language course" 50 in Fig. 5, the contents is distributed as a series in order of "programs" 51A, 51B, 51C, .... The ID of each element can be expressed by sequentially allocating the number from the left side in Fig. 5 every layer. For example, the element 40 can be expressed by ID[n_1_1_1]. The ID of the element 43A (sentence 1) in the "program" 51B of the nth time in the series is set to [n_2_2_1]. The ID can be also allocated to the element on the basis of another rule.

When the segment data received by the receiving terminal apparatus 4A is stored in the storing unit 13, it is managed by an ID list based on the IDs included in the meta-information corresponding to the segment data separately from the segment data itself or the meta-information associated for the segment data. Although the details will be explained hereinlater, in the case where the newly received segment data is stored in the storing unit 13, the ID list is referred to and the ID of the segment data is compared with the ID of the segment data which has already been stored in the storing unit 13. When the ID of the newly received segment data coincides with the ID of the segment data which has already been stored, the newly received segment data is not stored in the storing unit 13, so that the overlapped storage of the same segment data is avoided.

For instance, in the example of Fig. 5, it is assumed that the contents of "point" (tag 31I) in "previous review" (tag 31F) of the "program" 51B of the nth time coincide with "point" of the "program" 51A of the (n-1)th time. That is, the sentence 1 (element 42A) of the contents of "point" in "previous review" can be expressed by ID[n_2_2_1] in accordance with the above rule. The data of the same contents as those of the element 42A has already been received and stored as contents of "point" of the "program" 51A of the (n-1)th time. The ID of the data which has already been received and stored is assumed to be [(n-1)_4_1_0]. In this case, as an ID of the element 42A, for example, the ID of the data in which the same contents have been distributed earliest in the series is used. In this example, ID [(n-1)_4_1_0] is used as an ID of the element 42A.

When the data having the ID showing the data distributed by the "program" 51A of the (n-1)th time is received during the reception of the distribution of the "program" 51B of the nth time, the ID list stored in the storing unit 13 is referred to. Thus, assuming that the corresponding segment data of the "program^{"} 51A of the (n-1)th time distributed before the nth time has already been stored in the storing unit 13, only the meta-information of the newly received data is added to the storing unit 13 and stored. This meta-information is allowed to be associated with the corresponding segment data which has already been stored.

Such a process for avoiding the overlapped data storage by using the ID list as mentioned above is not limited to the foregoing example in which the data is distributed by the series but can be also applied to the case where the same segment data is distributed in one contents. Thus, the data can be efficiently stored in the storing unit 13.

The processes for the reception, storage, and reproduction of the distributed Contents in the receiving terminal apparatus 4A will now be described by using flowcharts of Figs. 6 and 7. Fig. 6 schematically shows processes from the reception to the reproduction of the distributed contents. In step S10, the distributed contents are received by the antenna 10 and supplied to the storage control unit 12 through the receiving unit 11.

A reproducing method of the received contents or the like is inputted to the user set managing unit 14 by the user (step S20). The user set information is registered (step S21). As user set information which is set, there are the reproducing method of the contents, reservation information (program reservation list) of the contents which is received, and the like. By setting the program reservation list, the reserved program can be automatically received and stored in the storing unit 13. As user set information, monitoring desired item information in the program for storing only the segment data which the user wants to monitor, monitoring required time as a time that is required for monitoring, and information such as the number of times of repetition of a specific portion for repetitively reproducing the specific segment data, pause time for performing a pause, and the like are also further included in the user set information.

By selecting the contents which the user wants to monitor without registering the user set information, the contents can be reproduced while receiving the contents.

In step S11, on the basis of the user set information registered in step S21, the storage of the received contents into the storing unit 13 is controlled by the storage control unit 12. The details of the process in step S11 will be explained hereinlater. By the storage control in step S11, the received contents is stored in the storing unit 13 (step S12).

Next Step S13 is a step of reproducing the contents stored in the storing unit 13. In this instance, the reproduction of the contents is automatically executed on the basis of the user set information registered in step S21 mentioned above. The details of the user setting regarding the reproduction will be explained hereinlater.

When the reproduction of the contents stored in the storing unit 13 is started in step S13 and a reproduction control instruction is issued by the user during the reproduction (step S14), the processing routine advances to step S15. In step S15, the reading operation of the contents from the storing unit 13 is temporarily controlled by the control of the reproduction control unit 15 based on the instruction of the user. For example, the temporary process such as repetitive reproduction or pause of the reproduction of the segment data during the reproduction according to the example of Fig. 3C mentioned above or change of the reproducing order of the segment data according to the example of Fig. 3D is instructed in step S14. The reproduction based on the instruction is performed in step S15.

Fig. 7 is a more detailed flowchart for the storage control process in step S11 in Fig. 6 mentioned above. The data reception (step S10 in Fig. 6) and the data storing process (step S12 in Fig. 6) are included in Fig. 7. The reception is started and the segment data is received in step S30. The received data is supplied to the storage control unit 12 and the meta-information distributed together with the segment data is analyzed (step S31).

The analyzed meta-information and the user set information set in step S21 in Fig. 6 are collated. On the basis of a result of the collation, whether it is necessary to store the received segment data or not is discriminated (step S32). If it is determined that there is no need to store the segment data, the processing routine advances to step S36. Whether the reception is finished or not is discriminated in step S36. If the reception is not finished, the processing routine is returned to step S30.

If it is decided in step S32 that it is necessary to store the received segment data, the processing routine advances to step S33 and the ID included in the meta-information corresponding to the received segment data is extracted. The extracted ID information and the ID list of the segment data which has already been stored in the storing unit 13 are collated (step S34). If the same ID as that of the received segment data exists in the ID list, it is regarded that the segment data of the same contents as those of the segment data has already been stored in the storing unit 13 and is not new data. The processing routine advances to step S36.

If it is determined in step S34 that the received segment data is the new data, the processing routine advances to step S35. In step S35, the received segment data and the meta-information of the segment data are stored in the storing unit 13. At the same time, if it is decided in step S34 that the received segment data is the new data, the ID of the segment data is added to the ID list.

After the received segment data and the meta-information of the segment data are stored in the storing unit 13 as mentioned above, the processing routine advances to step S36. In step S36, whether the receiving process has been finished or not is discriminated. If it is determined that the receiving process is not finished, the processing routine advances to step S30 and a procedure from the reception of the segment data is repeated. If it is determined that the receiving process has been finished, a series of processes is finished.

The user setting mentioned in steps S20 and S21 in Fig. 6 will now be more specifically explained. In the embodiment, three kinds of contents of (1) reservation of the monitoring desired program, (2) setting of the monitoring desired contents (items), and (3) automatic custom monitoring are presumed as contents which are set by the user setting. In the reservation of the monitoring desired program of (1), the reserved program is automatically stored in the storing unit 13. In the setting of the monitoring desired contents (items) of (2), information about the necessity of each item comprising the segment data is registered on the basis of a program structure which has previously been obtained. The segment data of "necessary" (it is desired to monitor) is stored in the storing unit 13. On the contrary, it is also possible to set so that the segment data of "unnecessary" is not reproduced. In the automatic custom monitoring of (3), the reproduction is controlled in a manner such that the contents can be monitored in the automatically optimized format merely by setting, for example, the level of the user or the reproducing mode without setting the fine items or the like.

The contents of the user setting are not limited to the above three kinds of contents of (1), (2), and (3). It is also possible to set so as to combine those three kinds.

The automatic custom reproduction of (3) will now be described. In the case where the contents has a specific structure and the structure has already been known, the user can select the monitoring method by a simple method. The contents "language course" 50 of the construction shown in Fig. 5 is now considered as contents. In the following description, for example, the elements 43A to 43C and 44A to 44C which are structured by the tag 31A showing "text" are expressed as "text" 31A. The other similar expressions are also similarly described.

For example, the user merely sets a degree of his own skill of a language, so that he can perform the reproduction according to the set degree of skill. As shown in an example in Fig. 8A, the degree of skill of the language of the user is set to three levels of "introductory", "intermediate", and "advanced". In case of setting to "introductory", the reproducing method is set so that the "English" 31H of the "text" 31A is reproduced twice, the "Japanese translation" 31C is reproduced once, the number of times of the "practice" 31E is set to two times, and the pause time in this instance is set to the time which is twice as long as the standard time, respectively. As shown in an example in Fig. 8B, the reproducing mode can be also set in accordance with the object. In the example of Fig. 8B, three modes of "standard", "review",and "summary review" can be set in accordance with the object. In case of setting to "review", the reproduction is set so as to reproduce the "text" 31A, "point" 31D, and "practice" 31E. In case of setting to "summary review", although not shown, the "text" 31A and "point" 31D stored in the storing unit 13 can be collectively reproduced by distributing the data a plurality of number of times.

As mentioned above, in the case where the reproduction which has been set to the order different from that in the contents upon distribution is performed while, particularly, receiving the relevant contents, the receiving terminal apparatus 4A needs to preliminarily know the structure of the contents. In the broadcasting station 2, the contents structure described in a predetermined format is distributed by a predetermined method. In case of the contents structure as shown in the example of Fig. 5 mentioned above, as shown in an example in Fig. 9, the layer structure of the tags can be expressed by sandwiching it with parentheses ( { } ). Apparently, the invention is not limited to this example but can use another expressing method.

The contents structure described as mentioned above is previously distributed to the receiving terminal apparatus 4A before the relevant contents is distributed. For example, the contents structure is distributed to the receiving terminal apparatus 4A by a method such that (1) it is preliminarily distributed as an EPG (Electronic Program Guide), (2) when the program is distributed, the Contents structure is distributed as meta-information to the head of the contents, (3) the user who wants to monitor the relevant program obtains it from, for example, the broadcasting station 2 or information providing sources 3A and 3B by using the bidirectional network 5 in Fig. 1, or the like. In case of using the EPG of (1), for example, the contents structure is added to the ordinary EPG data and distributed.

The contents structure can be also distributed by using two or three of those three methods. For example, in case of the method of using the EPG of (1) and the method of using the meta-information of (2), the contents structure is described by a simple structure such that it is useful for many users. In case of requiring the more detailed contents structure, the bidirectional network 5 of (3) is used.

Although it is assumed that the ID of the segment data is included in the meta-information in the above description, the invention is not limited to this example. For instance, the ID can be also included in the segment data itself.

As described above, according to the invention, in the case where the contents is segmented into the meaningful segments, the unique IDs are allocated to the segment data, the meta-information is associated therewith, and the contents is distributed, there are effects such that the received segment data is efficiently stored by using the ID and meta-information on the receiving side, and the reproduction of the contents can be flexibly performed by using the ID and meta-information in accordance with a requirement of the user.
1 BROADCAST NETWORK
2 BROADCASTING STATION
3A, 3B INFORMATION PROVIDING SOURCE
4A, 4B RECEIVING TERMINAL APPARATUS
5 BIDIRECTIONAL NETWORK
12 STORAGE CONTROL UNIT
13 STORING UNIT
14 USER SET MANAGING UNIT
15 REPRODUCTION CONTROL UNIT
20 CONTENTS
21A ∼ 20E SEGMENT DATA
31A ∼ 31I TAG
40 ∼ 46 ELEMENT

## Claims

1. A receiving apparatus to which segment data obtained by segmenting contents into meaningful segments and meta-information including a unique ID every said segment data are distributed and which receives the distributed segment data and meta-information, comprising:
receiving means for receiving the segment data;
storing means for storing the segment data received by said receiving means as said segments as they are and storing the meta-information of said segment data received together with said segment data in association with said received segment data; and
reproduction control means for controlling and reproducing said received segment data and/or said segment data stored in said storing means every said segment data in accordance with a setting.

2. A receiving apparatus according to claim 1, wherein
said storing means compares the meta-information of said stored segment data with the meta-information of segment data newly received, and when said newly received segment data and said stored segment data do not coincide, stores said newly received segment data.

3. A receiving apparatus according to claim 1, wherein
the storage of said received segment data into said storing means and the reproduction of said segment data stored in said storing means are executed in parallel.

4. A receiving apparatus according to claim 1, wherein
said reproduction control means changes the reproducing order for every said segment data of said received segment data and/or said segment data stored in said storing means on the basis of set information.

5. A receiving apparatus according to claim 4, wherein
said reproduction control means executes said change during the reproduction of said segment data.

6. A receiving apparatus according to claim 1, wherein
said reproduction control means changes the number of times of reproduction for every said segment data of said received segment data and/or said segment data stored in said storing means on the basis of set information.

7. A receiving apparatus according to claim 6, wherein
said reproduction control means executes said change during the reproduction of said segment data.

8. A receiving apparatus according to claim 1, wherein
said reproduction control means changes a reproducing interval for every said segment data of said received segment data and/or said segment data stored in said storing means on the basis of set information.

9. A receiving apparatus according to claim 8, wherein
said reproduction control means executes said change during the reproduction of said segment data.

10. A receiving method whereby segment data obtained by segmenting contents into meaningful segments and meta-information including a unique ID every said segment data are distributed and the distributed segment data and meta-information are received, comprising:
a receiving step of receiving the segment data;
a storing step of storing the segment data received in said receiving step as said segments as they are and storing the meta-information of said segment data received together with said segment data in association with said received segment data; and
a reproduction control step of controlling and reproducing said received segment data and/or said segment data stored in said storing step every said segment data in accordance with a setting.
